# FASCICULE DE BREVET EUROPEEN

(11) **EP 3 429 976 B1**
(45) Date de publication et mention de la délivrance du brevet: **09.09.2020**
(21) Numéro de dépôt: 17713363.4
(22) Date de dépôt: 13.03.2017
(51) Int. Cl.: C04B 28/14

(54) **PLAQUE DE PLATRE**
GIPSKARTONPLATTE
PLASTERBOARD

(30) Priorité: 14.03.2016 FR 1652118
(43) Date de publication de la demande: 23.01.2019
(73) Titulaire: SAINT-GOBAIN PLACO, 92400 Courbevoie (FR)
(72) Inventeur: DION, Yann, 93190 Livry Gargan (FR); CHUDA, Katarzyna, 92600 Asnieres Sur Seine (FR); DEMATHIEU-ROELTGEN, Caroline, 77100 Meaux (FR); CHENAL, Marion, 93100 Montreuil (FR)
(74) Mandataire: Saint-Gobain Recherche
(86) Numéro de dépôt international: PCT/FR2017/050562
(87) Numéro de publication internationale: WO 2017/158269

(56) Documents cités:
- EP-A1- 2 327 672
- EP-A2- 1 847 318
- WO-A1-2011/148075
- JP-A- H10 159 244

## Description

La présente invention concerne une plaque de plâtre contenant du charbon actif et un agent fixateur ainsi que sur son utilisation pour réduire la teneur en composés organiques volatils dans les bâtiments.

Les plaques de plâtre sont des panneaux comprenant une couche de plâtre entre deux feuilles de parement généralement en carton. Industriellement, le procédé de fabrication de plaques de plâtre comprend trois étapes principales : la mise en forme, la prise et le séchage. Lors de l'étape de mise en forme de la plaque de plâtre, une gâchée est réalisée en continu dans un mélangeur à partir de plâtre, d'eau et d'autres ingrédients spécifiques pour adapter les propriétés de la gâchée et/ou du produit final. Il est notamment connu d'ajouter des agents moussants ou de la mousse directement afin de réduire la densité des plaques de plâtre. La gâchée est ensuite déversée en continu sur une première feuille de parement entraînée par une courroie de transport vers une extrudeuse pour former la plaque. Après le repliement des bords de la première feuille de parement, une seconde feuille de parement est amenée au niveau de l'extrudeuse. L'extrudeuse plaque la seconde feuille de parement sur la gâchée, lisse les surfaces et réduit l'épaisseur de la plaque de plâtre à la valeur souhaitée. Pour améliorer les propriétés mécaniques des plaques de plâtre, il est également connu de former une couche de plâtre plus dense sur une face et éventuellement sur les bords de la plaque de plâtre. Pour cela, une première couche de gâchée plus dense, appelée couche de roller coating, est déversée et formée sur la première feuille de parement, en amont du déversement de la gâchée principale qui forme alors une deuxième couche appelée corps de la plaque de plâtre.

Les composés organiques volatils (COV) sont des substances chimiques à base de carbone et d'hydrogène présents dans l'air à l'état gazeux. La directive n°2010/75 de l'union européenne du 24 novembre 2010 les définit comme tout composé organique ayant une pression de vapeur de 0,01 kPa ou plus à une température de 293,15 K ou ayant une volatilité correspondante dans les conditions d'utilisation particulières. Ils comprennent des substances chimiques de diverses natures comme des alcanes, des alcènes tels que les terpènes, des alcynes, des alcools, des aldéhydes tels que le formaldéhyde, l'acétaldéhyde et l'heptanal, des cétones, des éthers tels que les éthers de glycols, des hydrocarbures aromatiques tels que le benzène et le toluène, ou des hydrocarbures halogénés tels que le tétrachloroéthylène et le dichlorobenzène. Des COV sont présents dans la plupart des peintures, matériaux de construction, dissolvants, détergents, combustibles, ainsi que dans les résines, vernis ou colles utilisés pour le mobilier ou les appareils électriques, ou encore dans les fumées de cigarettes. Ces COV se retrouvent dans l'air ambiant des bâtiments et, même si leur quantité paraît faible, ils peuvent à la longue incommoder les personnes qui y sont exposées voire affecter leur santé. En particulier, certains COV peuvent provoquer des réactions allergiques, des problèmes respiratoires, des nausées ou des maux de tête.

Ces dernières années, la proportion de COV émise par les matériaux précités a fortement diminué du fait d'une réglementation plus stricte. Pour autant, les matériaux alternatifs à faible, ou sans, émission de COV présentent souvent un coût plus élevé et des niveaux de performance plus faible.

Parallèlement aux efforts réalisés pour maîtriser l'émission de COV, différents moyens permettant de réduire la quantité de COV dans l'air ambiant ont donc été proposés. Ainsi, il a été proposé d'incorporer des agents adsorbant, tels que le charbon actif, dans les matériaux de construction. Le charbon actif présente un large spectre d'absorption de COV. Cependant, sa capacité d'adsorption n'est pas identique pour tous les types de COV. De plus, les COV adsorbés dans le charbon actif sont susceptibles d'être libéré à nouveau dans l'air ambiant, notamment sous l'effet de la chaleur.

Par ailleurs, l'utilisation d'agents fixateurs (scavenger) dans des matériaux à base de plâtre a également été proposée pour réduire spécifiquement la quantité de certains COV, tel que le formaldéhyde, dans l'air ambiant à l'intérieur des bâtiments. Bien que ces agents fixateurs soient généralement spécifiques à des COV présentant un certain type de fonction chimique, voire à un COV particulier, ils présentent l'avantage de les fixer durablement.

EP 1847318 A2 divulgue un panneau structurel comprenant du charbon actif. La séparation de l'agent fixateur et du charbon actif n'est pas décrit.

Afin d'améliorer la qualité de l'air à l'intérieur des bâtiments, il existe une demande pour des plaques de plâtre permettant de diminuer efficacement la concentration d'un large spectre de COV tout en conservant une efficacité spécifique envers certains COV, notamment le formaldéhyde, sans risque de libération ultérieure. Il a donc été envisagé d'introduire du charbon actif et un agent fixateur dans une plaque de plâtre afin de combiner avantageusement leurs propriétés. Or, la Demanderesse a remarqué que, de façon surprenante, il existe une interaction défavorable entre le charbon actif et les agents fixateurs affectant leurs efficacités. Ainsi, un objet de la présente invention est de proposer une plaque de plâtre permettant de conserver et de combiner les avantages du charbon actif et des agents fixateurs, sans modification importante des procédés industriels de fabrication de plaque de plâtre.

Ainsi, un aspect de la présente invention concerne une plaque de plâtre comprenant une première couche de plâtre et une deuxième couche de plâtre caractérisée en ce que la première couche comprend du charbon actif ; la deuxième couche comprend un agent fixateur ; la teneur en agent fixateur dans la première couche, exprimée en pourcentage en poids de matière sèche, est inférieure à la teneur en agent fixateur dans la deuxième couche ; et la deuxième couche est dépourvue de charbon actif, caractérisée en ce que le ratio en poids entre la quantité d'agent fixateur et la quantité de charbon actif dans la première couche de plâtre est inférieur à 1/10.

La première couche comprend de préférence moins de 35 % en poids, voire moins de 10 % en poids, ou même moins de 5% en poids, d'agent fixateur présent dans l'ensemble de la plaque de plâtre. La séparation du charbon actif d'une part dans la première couche et de l'agent fixateur d'autre part essentiellement dans la deuxième couche permet de résoudre ou minimiser le problème d'incompatibilité entre ces deux additifs mis en évidence par la Demanderesse et ainsi de conserver et cumuler l'efficacité de chacun de ces additifs vis-à-vis de leur capacité d'adsorption et/ou de fixation des COV.

Le terme « plâtre » au sens de la présente invention désigne en général aussi bien le plâtre pris, c'est-à-dire le dihydrate de sulfate de calcium (CaSO₄, 2 H₂O), que le plâtre non pris, c'est-à-dire l'hémihydrate de sulfate de calcium (CaSO₄, ½ H₂O). L'expression « plaque de plâtre » désigne par exemple le produit fini formé par du plâtre pris mais également une plaque de plâtre en cours de fabrication dans laquelle le plâtre n'est pas entièrement pris. Dans certain cas le terme « plâtre » sera cependant compris au sens strict, c'est-à-dire désignant l'hémihydrate de sulfate de calcium. Cela est évident par exemple lors que le terme « plâtre » est utilisé en référence à la matière première pour la préparation des gâchées. De même, lorsqu'il est fait référence à une quantité par rapport au poids sec de plâtre, ce dernier est considéré sous sa forme hémihydrate de sulfate de calcium.

La plaque de plâtre a généralement une épaisseur de 6 à 25 mm, de préférence 10 à 15 mm. La première couche de plâtre est de préférence une couche de roller coating. La deuxième couche de plâtre forme le corps de la plaque de plâtre. Par « couche de roller coating » au sens de la présente invention, on désigne une couche de plâtre de faible épaisseur, typiquement inférieure à 4 mm voire 2 mm, et présentant une densité supérieure à la couche formant le corps de la plaque de plâtre. La densité de la couche de roller coating est typiquement supérieure d'au moins 5 % et de préférence supérieure d'au plus 40 % par rapport au corps de la plaque, par exemple supérieure de 15 à 25 % par rapport au corps de plaque. Par « corps » de la plaque de plâtre au sens de la présente invention, on désigne une couche de plâtre dont l'épaisseur est au moins égale à la moitié de l'épaisseur de la plaque de plâtre, typiquement de 6 à 25 mm, de préférence 10 à 15 mm, et dont la densité est généralement de 0,4 à 1,5, de préférence de 0,6 à 1.

Dans la présente invention, la densité d'un corps est définie de façon classique, c'est-à-dire comme le rapport de la masse volumique dudit corps à la masse volumique de l'eau, prise égale à 1000 kg/m³.

Le charbon actif conforme à la présente invention est de préférence un charbon actif en poudre. En effet, à surface spécifique égale, un charbon en poudre présente une efficacité d'absorption des COV supérieure à un charbon actif granulé lorsqu'ils sont introduits dans une plaque de plâtre. Ainsi, le charbon actif selon l'invention présente typiquement une taille de particules moyenne de 1 à 100 µm, de préférence de 10 à 50 µm. La taille de particule moyenne est mesurée à l'aide d'un tamis à jet d'air selon la norme ASTM-D-5158-93 "Standard Test Method for Determination of the Particle Size of Powdered Activated Carbon by Air Jet Sieving*".* Il présente typiquement une surface spécifique d'au moins 100 m²/g, de préférence d'au moins 250 m²/g, plus préférentiellement d'au moins 500 m²/g et jusqu'à 1500 m²/g, voire 2000m²/g et même 2500 m²/g. La surface spécifique est mesurée en utilisant la méthode BET avec de l'azote selon la norme ISO 9277:2010.

L'expression « agent fixateur » au sens de la présente invention définit un agent fixateur de COV, c'est-à-dire une substance capable de fixer au moins un COV, notamment le formaldéhyde, ou un type de COV, notamment les aldéhydes, par liaison hydrogène, ionique ou covalente, de préférence par liaison covalente. Des exemples d'agents fixateurs au sens de la présente invention comprennent notamment les sulfites, les tanins, les flavonoïdes, les aminoalcools, les composés comprenant un groupe hydrazide, les sels d'ammonium, l'éthylène urée et ses dérivés, les composés comprenant un méthylène actif, les lactames, notamment le caprolactame, les polyamines, notamment la tétraéthylène pentamine, les amides, notamment le proprionamide, les complexes à base de zinc, notamment le complexe EDTA-Zn, et l'alcool vinylique.

Les sulfites selon l'invention comprennent notamment le disulfite d'ammonium, le bisulfite de potassium, le bisulfite de sodium, les métasulfites de métaux alcalins, en particulier de sodium, ou de métaux alcalino-terreux.

Les tanins selon la présente invention peuvent être des tanins condensés ou non-condensés, tels que les tanins d'acacia (cachou), de mimosa, de quebracho, de pin, de noix de pécan, de bois de cigüe et de sumac. Les tanins sont de préférence des tanins d'acacia.

Les flavonoïdes selon la présente l'invention comprennent les flavones, les flavonols, les dihydroflavonols, les flavanones, les aurones, les chalcones, les dihydrochalcones, les flavanols, les flavanediols et les anthocyanidines. Les flavonoïdes sont de préférence des flavanols, notamment la catéchine.

Des exemples d'aminoalcools selon l'invention comprennent les aminoalcools primaires de formule R¹R²R³-C-NH₂, dans laquelle R¹, R² et R³ sont indépendamment choisis parmi H, hydroxyle, alkyle en C1-C6 et hydroxyalkyle en C1-C6, au moins un des R¹, R² et R³ comprenant un groupement hydroxyle. Des aminoalcools préférés sont le 2-amino-2-méthyl-1,3-propanediol, le 2-amino-2(hydroxyméthyl)propane-1,3-diol (ou encore appelé tris(hydroxyméthyl)-aminométhane) et le 2-amino-2-éthyl-1,3-propanediol, en particulier le 2-amino-2(hydroxyméthyl)propane-1,3-diol.

Les composés comprenant un groupe hydrazide selon la présente invention comprennent les composés monohydrazide, tels que dodécanohydrazide, salicylohydrazide, formohydrazide, acétohydrazide, propionohydrazide, p-hydroxybenzohydrazide, naphtohydrazide et 3-hydroxy-2-naphtohydrazide, les composés dihydrazide, tels que oxalodihydrazide, malonodihydrazide, succinodihydrazide, adipodihydrazide, azélodihydrazide, sébacodihidrazide, dodécanedicarbodihydrazide, maléodihydrazide, fumarodihydrazide, diglycolodihydrazide, tartarodihydrazide, malodihidrazide, isophthalodihydrazide, téréphthalodihydrazide, 2,5-haphthodihydrazide et 2,4-dihydtazino-6-methylamino-1,3,5-triazine, et les composés polyhydrazide tels que les polyacrylohydrazide. Le composé comprenant un groupe hydrazide est de préférence l'adipodihydrazide.

Des exemples de sels d'ammonium selon la présente invention comprennent l'hydroxyde d'ammonium, les phosphates d'ammonium primaires et les phosphates d'ammonium secondaires.

Les dérivés de l'éthylène urée selon l'invention comprennent notamment la N-hydroxyéthylène urée, la N-aminoéthyléthylène urée, la N-[(3-allyloxy-2-hydroxypropyl)aminoéthyl]éthylène urée, la N-acryloyloxyéthyl-éthylène urée, la N-méthacryloyloxyéthyléthylène urée, la N-acryloylaminoéthyléthylène urée, la N-méthacryloylaminoéthyléthylène urée, la N-méthacryloyloxyacétoxyéthylène urée, la N-méthacryloyloxyacétaminoéthyléthylène urée et la N-di(3-allyloxy-2-hydroxypropyl)aminoéthyléthylène urée. Le dérivé de l'éthylène urée est de préférence l'éthylène urée elle-même.

L'expression « méthylène actif » au sens de la présente invention définit un méthylène, éventuellement substitué par un substituant, lié à deux groupes fonctionnels donneurs d'électrons, notamment comprenant une un groupe carbonyle. Des exemples de composés comprenant un méthylène actif selon l'invention sont les composés de formule (1): 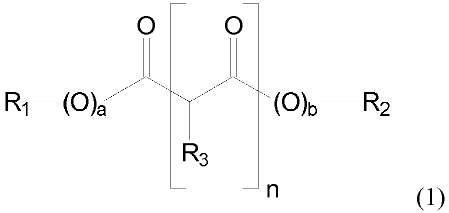 dans laquelle
- R₁ et R₂, identiques ou différent, représentent un hydrogène, un alkyle en C₁-C₂₀, de préférence en C₁-C₆, un amino ou 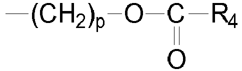 dans laquelle p est un entier de 1 to 6 et R₄ représente 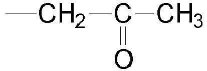 ou 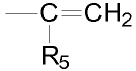 dans laquelle R₅ est un hydrogène ou un méthyle ;
- R₃ représente un hydrogène, un alkyle en C₁-C₁₀, un phényle ou un halogène ;
- a vaut 0 ou 1 ;
- b vaut 0 ou 1 ; et
- n vaut 1 ou 2.
Un composé de formule (1) préféré est l'acétoacétamide.

Dans un mode de réalisation préféré, l'agent fixateur est choisi parmi les aminoalcools, les composés comprenant un groupe hydrazide et les composés comprenant un méthylène actif, plus préférentiellement choisi parmi l'acétoacétamide et l'adipodihydrazide.

La plaque plâtre selon l'invention comprend typiquement de 0,01 à 2 %, de préférence de 0,05 à 1 % en poids de charbon actif par rapport au poids sec de plâtre. Le charbon actif est contenu de préférence uniquement dans la première couche de plâtre. Autrement dit, la deuxième couche de plâtre formant le corps de la plaque de plâtre est dépourvue de charbon actif, en particulier de charbon actif en poudre. La Demanderesse a en effet remarqué que le charbon actif en poudre a des propriétés anti-mousse, ce qui alourdi de façon indésirable la densité de la plaque de plâtre lorsqu'il est introduit dans le corps de la plaque. La première couche de plâtre satisfait de préférence une ou plusieurs des conditions suivantes :
- une épaisseur de 0,1 à 4 mm, en particulier de 0,8 à 3 mm;
- une densité de 0,8 à 1,5, en particulier de 1 à 1,2; et
- une teneur en charbon actif de 0,2 à 10 %, en particulier de 1 à 5 % en poids par rapport au poids sec de plâtre.

La plaque de plâtre selon l'invention comprend typiquement de 0,01 à 2 %, de préférence de 0,05 à 1 % en poids d'agent fixateur par rapport au poids sec de plâtre. L'agent fixateur est contenu dans la deuxième couche de plâtre, c'est-à-dire qu'elle peut comprendre au moins 65%, voire au moins 90%, ou même au moins 95%, en poids de la quantité d'agent fixateur contenu dans la plaque de plâtre. La première couche de plâtre peut comprendre jusqu'à 35% en poids, de préférence jusqu'à 10%, voire même jusqu'à 5% en poids, de la quantité d'agent fixateur présent dans la plaque de plâtre. Dans un mode de réalisation préféré, la première couche de plâtre est dépourvue d'agent fixateur. L'agent fixateur est alors contenu uniquement dans la deuxième couche de plâtre.
La deuxième couche de plâtre c satisfait une ou plusieurs des conditions suivantes :
- une épaisseur de 6 à 25 mm, en particulier 10 à 15 mm;
- une densité de 0,4 à 1,5, en particulier 0,6 à 1 ; et
- une teneur en agent fixateur de 0,01 à 2 %, en particulier de 0,05 à 1 % en poids par rapport au poids sec de plâtre.

La plaque de plâtre selon l'invention peut comprendre des additifs de processabilité permettant d'ajuster les propriétés des gâchées ainsi que d'autres agents fonctionnels permettant de modifier les propriétés de la plaque de plâtre finale. Les additifs de processabilité bien connus de l'homme du métier peuvent être notamment des agents d'adhésion, des accélérateurs de prise, des retardateurs de prise, des agents fluidifiants, des agents épaississant ou des agents anti-moussants. Les agents fonctionnels également bien connus de l'homme du métier peuvent être des agents moussants, des agents biocides, des agents hydrofugeant, des agents anti-feu ou des agents de renforcement. Le cas échant, les agents fonctionnels additionnels peuvent être introduits dans la première et/ou la deuxième couche.

Un autre aspect de la présente invention concerne un procédé de fabrication d'une plaque de plâtre telle que définie ci-dessus comprenant une étape de formage, une étape de prise et une étape de séchage, caractérisé en ce que l'étape de formage comprend:
- la fourniture d'une première feuille de parement;
- le déversement d'une première gâchée sur la première feuille de parement;
- le déversement d'une deuxième gâchée sur la première gâchée;
- la fourniture d'une seconde feuille de parement sur la deuxième gâchée ; et
- le formage de la plaque de plâtre à l'aide d'une extrudeuse ;
dans laquelle la première gâchée comprend du charbon actif ; la deuxième gâchée comprend un agent fixateur ; la teneur en agent fixateur dans le la première gâchée, exprimée en pourcentage en poids de matière sèche, est inférieure à la teneur en agent fixateur dans la deuxième gâchée ; et la deuxième gâchée est dépourvue de charbon actif, caractérisée en ce que le ratio en poids entre la quantité d'agent fixateur et la quantité de charbon actif dans la première couche de plâtre est inférieur à 1/10. La première gâchée comprend de préférence moins de 35 % en poids, voire moins de 10% en poids, ou même moins de 5% en poids, de la quantité d'agent fixateur contenu dans l'ensemble des gâchées. Dans un mode de réalisation particulier, la première gâchée est dépourvue d'agent fixateur.

Après prise et séchage les premières et deuxièmes gâchées forment respectivement la première couche de plâtre et deuxième couche de plâtres telles que définies ci-dessus. La première gâchée forme donc une couche de roller coating alors que la deuxième gâchée forme de préférence le corps de la plaque. La gâchée destinée à former le corps de la plaque est appelée ci-après « gâchée principale ».

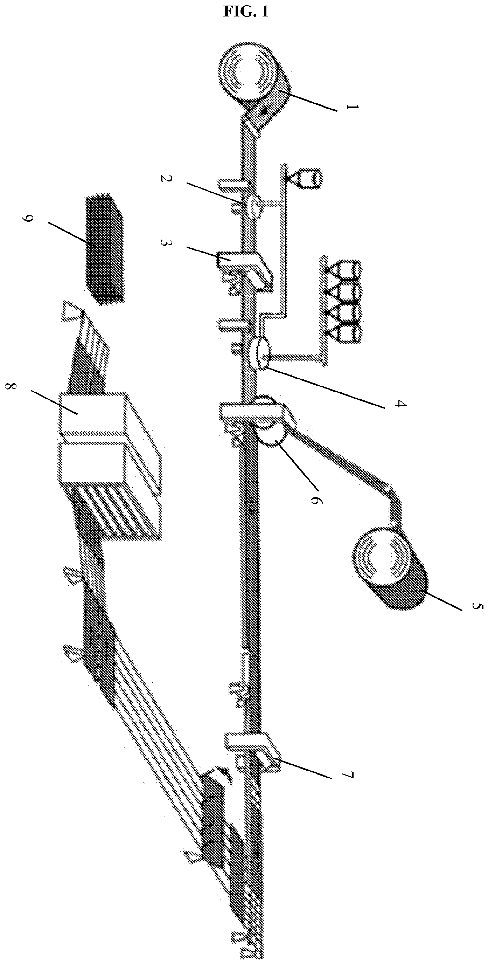

La Fig. 1 illustre de manière schématique un exemple de ligne industrielle de fabrication de plaque de plâtre avec une couche de roller coating. Une première feuille de parement 1 formant généralement la face avant de la plaque de plâtre (face visible lors du montage de la plaque) est entraînée par une courroie de transport. Une première gâchée est déversée en continu à partir d'un mélangeur secondaire 2 sur la première feuille de parement 1 et formée en une première couche homogène par un ensemble de rouleaux 3. Cette première couche donnera la couche de roller coating. A une distance déterminée permettant une prise suffisante de la première couche, la gâchée principale est déversée à partir d'un mélangeur principal 4 sur la première couche. Une deuxième feuille de parement 5 est amenée au-dessus de la gâchée principale au niveau de l'extrudeuse principale 6. Une bande de plâtre est extrudée à l'épaisseur voulue par l'extrudeuse principale 6 qui répartit la gâchée principale pour former la couche qui donnera le corps de la plaque. Après le transport de la bande de plâtre pendant une durée appropriée pour permettre une prise suffisante du plâtre, la bande de plâtre est coupée à la dimension souhaitée par un couteau rotatif 7. La plaque est ensuite généralement retournée pour éviter d'endommager la face avant de la plaque et transportée vers une série de séchoirs à étage 8 pour compléter la prise du plâtre et éliminer l'eau excédentaire avant d'être conditionnée et envoyée en zone de stockage 9.

La gâchée principale comprend typiquement, pour 100 parts en poids de plâtre :
- 40 à 200 parts d'eau ;
- 2 à 10 parts de mousse obtenue à partir d'un mélange d'eau et d'un agent moussant, par exemple un alkylsulfate éventuellement en mélange avec un alkyléthersulfate ; et
- 0,1 à 1 part d'accélérateur de prise, par exemple le sulfate de calcium hydraté ou le sulfate de potassium.
Elle peut également comprendre un ou plusieurs des composants suivants :
- 0,1 à 15 parts d'un agent d'adhésion, par exemple un poly(acétate de vinyl), un poly(alcool vinylique), un amidon, notamment préalablement traité avec un acide ou pré-gélatinisé, une dextrine ou une farine végétale, notamment de blé ou de maïs ;
- 0,001 à 10 parts d'un biocide, par exemple les carbamates, tel que le 3-iodoprop-2-yn-1-yl butylcarbamate, ou les complexes de pyrothione ;
- 0,1 à 10 parts d'au moins un agent hydrofugeant, par exemple un siloxane, un polysiloxane ou une cire ;
- 0,1 à 20 parts d'au moins un agent anti-feu, par exemple la vermiculite, la silice, notamment de dimension micrométrique ou une argile ; et/ou
- 0,1 à 20 parts d'au moins un agent de renforcement, par exemple des fibres de polymère, des fibres minérales, notamment en verre, ou végétales.

La première gâchée destinée à la couche de roller coating peut être préparée indépendamment ou, comme illustré sur la figure 1, elle peut être obtenue à partir de la gâchée principale. Dans ce dernier cas, une conduite permet d'acheminer une partie de la gâchée principale depuis le mélangeur principal 4 jusqu'au mélangeur secondaire 2. Il est alors nécessaire d'y ajouter un agent anti-mousse et éventuellement un agent fluidifiant pour casser la mousse présente dans la gâchée principale et obtenir une couche de roller coating ayant la densité souhaitée. Le charbon actif en poudre a pour particularité d'avoir des propriétés anti-mousse. L'ajout de charbon actif en poudre au niveau de la couche de roller coating a ainsi comme avantage de nécessiter moins d'ajout, voire aucun ajout, d'agent anti-mousse lorsque la gâchée destinée à la couche de roller coating est préparée à partir de la gâchée principale. De façon alternative, la gâchée principale peut être obtenue à partir de la gâchée secondaire. Dans ce cas, la gâchée secondaire est préparée dans le mélangeur secondaire et une conduite permet d'acheminer une partie de la gâchée secondaire depuis le mélangeur secondaire jusqu'au mélangeur principal. La gâchée secondaire peut, comme pour la gâchée principale, comprendre des additifs tels que mentionnés ci-dessus. Ces additifs sont généralement ajoutés dans la gâchée secondaire dans des proportions équivalentes à celles mentionnées pour la gâchée principale. Certains ajouts peuvent être également réalisés au niveau du mélangeur principal pour ajuster les propriétés de la gâchée principale. En particulier, une première mousse peut être introduite dans la gâchée secondaire au niveau du mélangeur secondaire tandis qu'une seconde mousse peut être introduite dans la gâchée principale au niveau du mélangeur principal. Lesdites première et deuxième mousses peuvent être identiques ou différentes (notamment en terme de masse volumique et/ou de taille de bulles) et sont généralement introduites en quantités différentes dans les gâchées respectives.

Lorsque la première gâchée est obtenue à partir de la deuxième gâchée, elle contient alors nécessairement une certaine quantité d'agent fixateur. Cette quantité est de préférence inférieure à 35 % en poids, voire inférieure à 10 % en poids, ou même inférieure à 5% en poids de la quantité d'agent fixateur présent dans l'ensemble des gâchées. Il est cependant préférable que la première gâchée ne soit pas préparée à partir de la deuxième gâchée afin que la première gâchée, et par conséquent la première couche de plâtre obtenue à partir de celle-ci, soit dépourvue d'agent fixateur.

Le charbon actif, en particulier en poudre, est de préférence ajouté dans le mélangeur secondaire sous forme d'une suspension aqueuse comprenant un agent fluidifiant. La Demanderesse a en effet remarqué qu'un pré-mélange du charbon actif en poudre avec l'agent fluidifiant permet d'obtenir une suspension suffisamment stable permettant un dosage convenable du charbon actif, notamment lors de procédés industriels en continu, et une répartition plus homogène de celui-ci dans la gâchée obtenue, et par conséquent dans les plaques de plâtre fabriquées. Le pré-mélange comprend typiquement de 1 à 25 %, de préférence de 5 à 15 % en poids de charbon actif en poudre. Il comprend typiquement au moins 0,01 %, de préférence de 0,05 à 5 %, plus préférentiellement de 0,1 à 3 % en poids d'agent fluidifiant. L'agent fluidifiant peut être notamment choisi parmi les polycarboxylates, notamment les éthers polycarboxylates, les polynaphtalènes sulfonés (sels de polycondensats sulfonés de naphtalène et de formaldéhyde), les lignosulfonates, les résines mélamine sulfonées (sels de polycondensats sulfonés de mélamine et formaldéhyde) et les polyacrylates couramment utilisés dans la fabrication des plaques de plâtre. A titre d'exemples d'agents fluidifiants, on peut citer ceux commercialisés sous la dénomination GLENIUM® par BASF, sous la dénomination FLUBE® par Bozzetto, sous la dénomination CHRYSOFLUID® par Chryso, sous la dénomination VISCOCRETE® par Sika, sous la dénomination MELMENT® par BASF ou encore sous la dénomination MAPEFLUID® par Mapei. L'agent fluidifiant est de préférence choisi parmi les polynaphtalènes sulfonés et les résines mélamine-formaldéhyde sulfonées, plus préférentiellement parmi les polynaphtalènes sulfonés.

La présente invention concerne également l'utilisation d'une plaque de plâtre telle que décrite ci-dessus pour réduire la quantité de COV dans l'air à l'intérieur des bâtiments. Les COV sont de préférence choisis parmi le formaldéhyde, l'hexanal, le benzène, le toluène, le tétrachloroéthène, le 1,2-dichlorobenzène et l'undécane.

L'invention est illustrée à l'aide d'exemples non limitatifs suivants.

### EXEMPLE

Des plaques de référence R1 à R3 et selon l'invention I1 ont été fabriquées à partir de différentes gâchées principales, destinées à la formation du corps des plaques, et gâchées secondaires, destinées à la formation des couches de roller coating. Chaque gâchée principale a comme composition de base 100 parts en poids de plâtre (CaSO₄, ½ H₂O), 75 parts d'eau, 3 parts de mousse (obtenue à partir d'eau contenant 1% en poids de laurylsulfate de sodium), 5 parts d'amidon, 3 parts de fluidifiant et 0,5 parts d'accélérateur de prise. Chaque gâchée secondaire a comme composition de base 100 parts en poids de plâtre (CaSO₄, ½ H₂O), 77 parts d'eau, 5 parts d'amidon, 3,2 parts de fluidifiant et 0,5 parts d'accélérateur de prise.

Les plaques R1 et R3 sans couche de roller coating ont été préparées comme suit. Les différents ingrédients sont pesés et mélangés à l'aide d'un malaxeur et d'une pale de type dé-floculeuse à 1600 TR/mn pendant une minute pour obtenir une pâte homogène. La mousse est préparée à la densité souhaitée et mélangée à la pâte obtenue dans un malaxeur avec une pale à 250 tr/mn pour obtenir une gâchée principale. Dans un moule de dimension 20 x 25 cm et d'épaisseur 12,5 mm, on dispose une première feuille de carton. La gâchée principale est versée sur le premier carton et arasée à l'épaisseur du moule. Une deuxième feuille de carton est disposée sur la gâchée principale et le moule est refermé pour maintenir une pression sur la plaque. Après durcissement de la plaque, celle-ci est démoulée et séchée en étuve pendant 24 heures à 40°C.

Pour les plaques R2, R4 et P1 avec couche de roller coating, les ingrédients pour la gâchée secondaire sont pesés et mélangés à l'aide d'un malaxeur et d'une pâle de type dé-floculeuse à 1600 TR/mn pendant une minute. Dans un moule de dimension 20 x 25 cm et d'épaisseur 12,5 mm, on dispose une première feuille de carton. La gâchée secondaire est versée sur le premier carton et arasée à une épaisseur d'environ 1 mm. La gâchée principale est préparée comme pour les plaques R1 et R3 et déversée sur la gâchée secondaire lorsque celle-ci est suffisamment prise, et arasée à l'épaisseur du moule. Une deuxième feuille de carton est disposée sur la gâchée principale et le moule est refermé pour maintenir une pression sur la plaque. Après durcissement de la plaque, celle-ci est démoulée et séchée en étuve pendant 24 heures à 40°C.

Le tableau 1 indique les additifs, charbon actif (CA) ou acétoacétamide (AA), ajoutés le cas échéant aux gâchées avant fabrication des plaques. La valeur entre parenthèse indique le pourcentage en poids sec de l'additif dans la couche considérée. Le symbole « - » indique qu'aucun additif n'est ajouté dans la gâchée correspondante. Le symbole « x » indique que la plaque ne comprend pas la couche correspondante. Le charbon actif utilisé est un charbon actif en poudre commercialisé sous la référence Pulsorb® 208CP et ayant une surface spécifique de 1200 m²/g et une tailles de particules moyenne d'environ 30 µm. Pour chaque plaque, le corps a une épaisseur de 11,5 mm, sauf pour les plaques R4 qui présentent une épaisseur de 12,5 mm, et les couches de roller coating ont chacune une épaisseur de 1 mm.

La capacité de chacune des plaques à piéger les COV a été évaluée du point de vue de l'absorption et de la désorption selon les normes ISO1600-24:2009 et ISO1600-23:2009 à une température de 23°C±2°C et une humidité relative de 50 % ± 5% pendant l'essai. Le facteur de charge de la plaque est fixé à 1 et le taux de renouvellement de l'air à 0,5 vol.h⁻¹. Deux séries de mesures indépendantes ont été réalisées pour évaluer leur capacité à piéger d'une part le toluène et d'autre part le formaldéhyde. Pour chaque série de mesure, les plaques ont été soumises à une phase d'absorption (14 jours pour le toluène ; 7 jours pour le formaldéhyde) pendant laquelle l'air est renouvelé avec un flux d'air comprenant un COV (à une concentration de 40 µg.m⁻³ pour le toluène ; 100 µg.m⁻³ pour le formaldéhyde) pour mesurer le taux d'absorption pour le COV considéré, puis à une phase de désorption (7 jours pour le toluène ; 7 jours pour le formaldéhyde) pendant laquelle l'air est renouvelé avec un flux d'air frais (sans COV) pour mesurer le taux de désorption pour le COV considéré.

Le tableau 1 indique le pourcentage de réduction (absorption) de la teneur en formaldéhyde et en toluène et le pourcentage de désorption de formaldéhyde et de toluène pour chacune des plaques. (les exemples Rx sont comparatifs et l'exemple P1 est inventif).

**Tableau 1**

| | | R1 | R2 | R3 | R4 | P1 |
|---|---|---|---|---|---|---|
| Corps | | - | - | AA (0.12) | - | AA (0.12) |
| Roller Coating | | x | CA (2) | x | CA (2) AA (1.5) | CA (2) |
| Absorption (%) | Formaldéhyde | 37 | 50 | 93 | 94 | 89 |
| | Toluène | 0 | 98 | 10 | 8 | 85 |
| Désorption (%) | Formaldéhyde | 58 | 17 | <2 | n.m. | <2 |
| | Toluène | <1 | <1 | <1 | n.m. | <1 |

| | | | | | | |
|---|---|---|---|---|---|---|
| n.m. : non mesuré | | | | | | |

La plaque R3 comprenant un agent fixateur présente une bonne absorption du formaldéhyde mais ne permet pas une réduction suffisante de la teneur des autres COV, notamment du toluène. La plaque R2 comprenant du charbon actif permet un abattement correct d'un large spectre de COV, y compris le formaldéhyde, mais ce dernier n'est pas fixé de manière pérenne comme le montre la valeur de désorption élevée pour le formaldéhyde. La plaque R4 comprenant une combinaison d'un agent fixateur et de charbon actif est peu efficace vis-à-vis du toluène. Au contraire, la plaque P1 selon l'invention permet à la fois un abattement important et une fixation pérenne du formaldéhyde et du toluène.

## Revendications

1. Plaque de plâtre comprenant une première couche de plâtre et une deuxième couche de plâtre **caractérisée en ce que** la première couche comprend du charbon actif ; la deuxième couche comprend un agent fixateur ; la teneur en agent fixateur dans la première couche, exprimée en pourcentage en poids de matière sèche, est inférieure à la teneur en agent fixateur dans la deuxième couche ; et la deuxième couche est dépourvue de charbon actif, **caractérisée en ce que** le ratio en poids entre la quantité d'agent fixateur et la quantité de charbon actif dans la première couche de plâtre est inférieur à 1/10.

2. Plaque de plâtre selon la revendication 1, **caractérisée en ce que** la première couche a une épaisseur de 0,1 à 4 mm.

3. Plaque de plâtre selon l'une quelconque des revendications 1 ou 2, **caractérisée en ce que** la première couche a une densité de 0,8 à 1,5.

4. Plaque de plâtre selon l'une quelconque des revendications 1 à 3, **caractérisée en ce que** la première couche est dépourvue d'agent fixateur.

5. Plaque de plâtre selon l'une quelconque des revendications 1 à 4, **caractérisée en ce que** la deuxième couche a une épaisseur de 6 à 25 mm.

6. Plaque de plâtre selon l'une quelconque des revendications 1 à 5, **caractérisée en ce que** la deuxième couche a une densité de 0,4 à 1,5.

7. Plaque de plâtre selon l'une quelconque des revendications 1 à 6, **caractérisée en ce que** la première couche a une densité supérieure à la densité de la deuxième couche.

8. Plaque de plâtre selon l'une quelconque des revendications 1 à 7, **caractérisée en ce que** le charbon actif est un charbon actif en poudre.

9. Plaque de plâtre selon l'une quelconque des revendications 1 à 8, **caractérisée en ce que** le charbon actif a une taille de particule moyenne de 1 à 100 µm.

10. Plaque de plâtre selon l'une quelconque des revendications 1 à 9, **caractérisée en ce que** ladite plaque de plâtre comprend de 0,01 à 2 % en poids de charbon actif par rapport au poids sec de plâtre.

11. Plaque de plâtre selon l'une quelconque des revendications 1 à 10, **caractérisée en ce que** l'agent fixateur est choisi parmi les composés comprenant un groupe hydrazide, les composés comprenant un méthylène actif et leurs mélanges.

12. Plaque de plâtre selon l'une quelconque des revendications 1 à 11, **caractérisée en ce que** ladite plaque de plâtre comprend de 0,01 à 2 % en poids d'agent fixateur par rapport au poids sec de plâtre.

13. Procédé de fabrication d'une plaque de plâtre selon l'une quelconque des revendications 1 à 12, ledit procédé comprenant une étape de formage, une étape de prise et une étape de séchage, **caractérisé en ce que** l'étape de formage comprend:
- la fourniture d'une première feuille de parement;
- le déversement d'une première gâchée sur la première feuille de parement;
- le déversement d'une deuxième gâchée sur la première gâchée;
- la fourniture d'une seconde feuille de parement sur la deuxième gâchée ; et
- le formage de la plaque de plâtre à l'aide d'une extrudeuse ;
dans laquelle la première gâchée comprend du charbon actif ; la deuxième gâchée comprend un agent fixateur ; la teneur en agent fixateur dans le la première gâchée, exprimée en pourcentage en poids de matière sèche, est inférieure à la teneur en agent fixateur dans la deuxième gâchée ; et la deuxième gâchée est dépourvue de charbon actif, **caractérisée en ce que** le ratio en poids entre la quantité d'agent fixateur et la quantité de charbon actif dans la première gâchée est inférieur à 1/10.

14. procédé selon la revendication 13, **caractérisé en ce que** la première gâchée est dépourvue d'agent fixateur.

15. Utilisation d'une plaque de plâtre selon l'une quelconque des revendications 1 à 12 pour réduire la quantité de composés organiques volatils dans l'air à l'intérieur des bâtiments.

## Patentansprüche

1. Gipskartonplatte, umfassend eine erste Gipsschicht und eine zweite Gipsschicht, **dadurch gekennzeichnet, dass** die erste Schicht Aktivkohle umfasst; die zweite Schicht ein Fixiermittel umfasst; der Gehalt an Fixiermittel in der ersten Schicht, ausgedrückt als Gewichtsprozent Trockenmasse, niedriger als der Gehalt an Fixiermittel in der zweiten Schicht ist; und die zweite Schicht frei von Aktivkohle ist, **dadurch gekennzeichnet, dass** das Gewichtsverhältnis zwischen der Menge an Fixiermittel und der Menge an Aktivkohle in der ersten Gipsschicht niedriger als 1/10 ist.

2. Gipskartonplatte nach Anspruch 1, **dadurch gekennzeichnet, dass** die erste Schicht eine Dicke von 0,1 bis 4 mm aufweist.

3. Gipskartonplatte nach einem der Ansprüche 1 oder 2, **dadurch gekennzeichnet, dass** die erste Schicht eine Dichte von 0,8 bis 1,5 aufweist.

4. Gipskartonplatte nach einem der Ansprüche 1 bis 3, **dadurch gekennzeichnet, dass** die erste Schicht frei von Fixiermittel ist.

5. Gipskartonplatte nach einem der Ansprüche 1 bis 4, **dadurch gekennzeichnet, dass** die zweite Schicht eine Dicke von 6 bis 25 mm aufweist.

6. Gipskartonplatte nach einem der Ansprüche 1 bis 5, **dadurch gekennzeichnet, dass** die zweite Schicht eine Dichte von 0,4 bis 1,5 aufweist.

7. Gipskartonplatte nach einem der Ansprüche 1 bis 6, **dadurch gekennzeichnet, dass** die erste Schicht eine Dichte aufweist, die höher als die Dichte der zweiten Schicht ist.

8. Gipskartonplatte nach einem der Ansprüche 1 bis 7, **dadurch gekennzeichnet, dass** die Aktivkohle pulverisierte Aktivkohle ist.

9. Gipskartonplatte nach einem der Ansprüche 1 bis 8, **dadurch gekennzeichnet, dass** die Aktivkohle eine durchschnittliche Teilchengröße von 1 bis 100 µm aufweist.

10. Gipskartonplatte nach einem der Ansprüche 1 bis 9, **dadurch gekennzeichnet, dass** die Gipskartonplatte 0,01 bis 2 Gew.-% Aktivkohle im Verhältnis zu dem Trockengewicht von Gips umfasst.

11. Gipskartonplatte nach einem der Ansprüche 1 bis 10, **dadurch gekennzeichnet, dass** das Fixiermittel aus Verbindungen, die eine Hydrazidgruppe umfassen, Verbindungen, die ein aktives Methylen umfassen, und deren Gemischen ausgewählt ist.

12. Gipskartonplatte nach einem der Ansprüche 1 bis 11, **dadurch gekennzeichnet, dass** die Gipskartonplatte 0,01 bis 2 Gew.-% Fixiermittel im Verhältnis zu dem Trockengewicht von Gips umfasst.

13. Verfahren zur Herstellung einer Gipskartonplatte nach einem der Ansprüche 1 bis 12, wobei das Verfahren einen Formungsschritt, einen Abbindeschritt und einen Trocknungsschritt umfasst, **dadurch gekennzeichnet, dass** der Formungsschritt umfasst:
- das Bereitstellen einer ersten Verblendungstafel;
- das Gießen einer ersten Charge auf die erste Verblendungstafel;
- das Gießen einer zweiten Charge auf die erste Charge;
- das Bereitstellen einer zweiten Verblendungstafel auf der zweiten Charge; und
- das Formen der Gipskartonplatte mithilfe eines Extruders;
wobei die erste Charge Aktivkohle umfasst; die zweite Charge ein Fixiermittel umfasst; der Gehalt an Fixiermittel in der ersten Charge, ausgedrückt als Gewichtsprozent Trockenmasse, niedriger als der Gehalt an Fixiermittel in der zweiten Charge ist; und die zweite Charge frei von Aktivkohle ist, **dadurch gekennzeichnet, dass** das Gewichtsverhältnis zwischen der Menge an Fixiermittel und der Menge an Aktivkohle in der ersten Charge niedriger als 1/10 ist.

14. Verfahren nach Anspruch 13, **dadurch gekennzeichnet, dass** die erste Charge frei von Fixiermittel ist.

15. Verwendung einer Gipskartonplatte nach einem der Ansprüche 1 bis 12 zur Verringerung der Menge an flüchtigen organischen Verbindungen in der Innenluft von Gebäuden.

## Claims

1. A plasterboard comprising a first layer of plaster and a second layer of plaster, **characterized in that** the first layer comprises activated carbon; the second layer comprises a scavenging agent; the content of scavenging agent in the first layer, expressed as percentage by weight of dry matter, is less than the content of scavenging agent in the second layer; and the second layer is free of activated carbon, **characterized in that** the weight ratio of the amount of scavenging agent to the amount of activated carbon in the first plaster layer is less than 1/10.

2. The plasterboard as claimed in claim 1, **characterized in that** the first layer has a thickness of 0.1 to 4 mm.

3. The plasterboard as claimed in either one of claims 1 and 2, **characterized in that** the first layer has a density of 0.8 to 1.5.

4. The plasterboard as claimed in any one of claims 1 to 3, **characterized in that** the first layer is free of scavenging agent.

5. The plasterboard as claimed in any one of claims 1 to 4, **characterized in that** the second layer has a thickness of 6 to 25 mm.

6. The plasterboard as claimed in any one of claims 1 to 5, **characterized in that** the second layer has a density of 0.4 to 1.5.

7. The plasterboard as claimed in any one of claims 1 to 6, **characterized in that** the first layer has a density greater than the density of the second layer.

8. The plasterboard as claimed in any one of claims 1 to 7, **characterized in that** the activated carbon is a powdered activated carbon.

9. The plasterboard as claimed in any one of claims 1 to 8, **characterized in that** the activated carbon has a mean particle size of 1 to 100 µm.

10. The plasterboard as claimed in any one of claims 1 to 9, **characterized in that** said plasterboard comprises from 0.01 to 2% by weight of activated carbon, with respect to the dry weight of plaster.

11. The plasterboard as claimed in any one of claims 1 to 10, **characterized in that** the scavenging agent is chosen from compounds comprising a hydrazide group, compounds comprising an active methylene and their mixtures.

12. The plasterboard as claimed in any one of claims 1 to 11, **characterized in that** said plasterboard comprises from 0.01 to 2% by weight of scavenging agent, with respect to the dry weight of plaster.

13. A process for the manufacture of a plasterboard as claimed in any one of claims 1 to 12, said process comprising a forming stage, a setting stage and a drying stage, **characterized in that** the forming stage comprises:
- the provision of a first facing sheet;
- the pouring of a first mixed batch over the first facing sheet;
- the pouring of a second mixed batch over the first mixed batch;
- the provision of a second facing sheet over the second mixed batch; and
- the forming of the plasterboard using an extruder;
in which the first mixed batch comprises activated carbon; the second mixed batch comprises a scavenging agent; the content of scavenging agent in the second mixed batch, expressed as percentage by weight of dry matter, is less than the content of scavenging agent in the second mixed batch; and the second mixed batch is free of activated carbon, **characterized in that** the weight ratio of the amount of scavenging agent to the amount of activated carbon in the first mixed batch is less than 1/10.

14. The process as claimed in claim 13, **characterized in that** the first mixed batch is free of scavenging agent.

15. The use of a plasterboard as claimed in any one of claims 1 to 12 for reducing the amount of volatile organic compounds in the air inside buildings.
